# DEMANDE DE BREVET EUROPEEN

(11) **EP 2 639 528 A1**
(43) Date de publication de la demande: **18.09.2013**
(21) Numéro de dépôt: 13158803.0
(22) Date de dépôt: 12.03.2013
(51) Int. Cl.: F24J 2/52

(54) **Installation photovoltaique modulaire de pose simplifiée et châssis en aluminium pour une telle installation**

(30) Priorité: 13.03.2012 FR 1252229
(71) Demandeur: DANI ALU, 69280 Sainte Consorce (FR)
(72) Inventeur: Peyron, Grégory, 69126 BRINDAS (FR)
(74) Mandataire: Chevalier, Renaud Philippe

(57) **Abrégé**

L'invention concerne une installation (1) d'implantation de panneaux solaires (2) reposant sur une surface extérieure (3) d'un bâtiment (4), du genre toit-terrasse, ladite installation comprenant une infrastructure (10) modulaire, destinée à accueillir des panneaux solaires (2), qui comporte une pluralité de châssis individuels (11) juxtaposés disjoints, aptes à supporter chacun de manière autonome au moins un panneau solaire (2), chacun desdits châssis comportant ses propres organes de retenue (12) agencés selon une configuration d'accueil prédéterminée adaptée pour la réception et la fixation dudit ou desdits panneaux solaires, chacun desdits châssis s'appuyant sur la surface (3) du bâtiment par ses propres pieds porteurs (13) et se trouvant fixé à ladite surface (3) par ses propres organes d'arrimage (14) exclusifs, sans partager lesdits organes de retenue (12), lesdits pieds porteurs (13), ni lesdits organes d'arrimage (14) avec les châssis (11) voisins.

## Description

La présente invention se rapporte au domaine général des installation solaires, notamment photovoltaïques, rapportées et fixées à la structure de bâtiments, tels que des bâtiments industriels, commerciaux ou d'habitation, et plus particulièrement aux installations couvrant des structures sensiblement horizontales telle que des toits-terrasses.

Il est connu de réaliser des champs de panneaux photovoltaïques en juxtaposant sensiblement bords à bords plusieurs rangées de panneaux photovoltaïques, et en particulier des panneaux photovoltaïques non cadrés, c'est-à-dire dépourvus de bordure faisant saillie par rapport au verre protégeant les cellules photovoltaïques, de tels panneaux non cadrés présentant en effet le double avantage d'offrir une plus grande surface de captage utile et de ne pas retenir l'eau ou la poussière lorsqu'ils sont disposés à plat.

La réalisation d'une telle installation nécessite, pour des considérations tant de compétence que de responsabilité, de faire intervenir séparément et successivement deux corps de métier distincts, à savoir tout d'abord un « étancheur », qui vient mettre préalablement en place sur la surface du bâtiment une infrastructure porteuse, comportant généralement un réseau bidirectionnel de plots individuels alignés, tout en veillant à ce que ladite infrastructure ne dégrade pas l'étanchéité du bâtiment, puis un électricien qui vient poser et fixer les panneaux photovoltaïques un par un sur ladite infrastructure, de sorte à « paver » la surface du bâtiment, puis qui réalise les connexions électriques entre les panneaux et l'installation que ceux-ci alimentent en énergie.

La principale difficulté de mise en oeuvre d'une telle installation résulte de la très faible tolérance de pose des panneaux photovoltaïques, en particulier si ceux-ci sont non cadrés, ladite tolérance de pose imposant en effet que l'ensemble des plots de fixation soient disposés les uns par rapport aux autres avec une précision de l'ordre du millimètre, tout au plus de quelques millimètre, pour pouvoir assurer la tenue desdits panneaux.

Cette contrainte d'alignement pèse de surcroît entièrement sur l'étancheur, dans la mesure où il sera impossible à l'électricien de corriger ultérieurement la structure pour rattraper une éventuelle dérive de l'implantation initiale.

Une installation usuelle présentant généralement une longueur et une largeur supérieures à plusieurs mètres, et les dérives de positionnement des rangées successives de plots se cumulant, la tâche de l'étancheur est donc particulièrement délicate, celui-ci devant impérativement travailler avec un grand soin et une grande précision.

C'est pourquoi l'étancheur doit multiplier les opérations dites de « calepinage » (prises de mesures, réalisation de schémas d'implantation, tracés au sol sur la surface à équiper), ainsi que les vérifications systématiques et corrections en cours d'installation, ce qui rend sa tâche particulièrement fastidieuse et longue, et par conséquent coûteuse.

En outre, les infrastructures de pose de panneaux photovoltaïques connues sont fréquemment constituées d'une pluralités de structures distinctes superposées, comprenant par exemple une première série de rails parallèles rapportés et fixés sur les plots fixés au bâtiment, puis une seconde série de rails fixés sur les rails de la première série sensiblement perpendiculairement à ces derniers, les panneaux étant ensuite fixés sur ces seconds rails.

Si une telle disposition permet dans une certaine mesure d'ajuster l'alignement des seconds rails sans modifier la configuration des premiers rails, et donc autorise certaines retouches légères, toutefois relativement limitées, de l'infrastructure lors de la pose, elle engendre en revanche systématiquement une multiplication des pièces d'infrastructure, livrées en kit sur le chantier, ce qui augmente bien entendu significativement le poids de ladite infrastructure, son coût d'approvisionnement, et multiplie les opérations de calepinage et d'assemblage nécessaire à la réalisation de l'installation.

On connaît par ailleurs, par le document US-2011/0209422 (KING), un procédé d'installation de panneaux solaires cadrés, qui consiste à fixer un premier pied supérieur à un chevron, à travers le bardage de couverture, à suspendre audit pied le panneau solaire, par le bord supérieur de son cadre, puis à engager un second pied sur le bord inférieur opposé dudit cadre, et à faire glisser ledit second pied jusqu'à venir le placer à l'aplomb du premier pied, pour le visser à son tour, à travers le bardage, au même chevron. Plusieurs panneaux peuvent ainsi être successivement juxtaposés, chacun étant maintenu par sa propre paire de pieds.

Un tel procédé présente toutefois de multiples inconvénients, liés notamment à ses contraintes de mise en oeuvre.

En premier lieu, les dimensions et l'implantation du panneau solaire sont dictées par l'agencement des chevrons et du bardage de couverture. La généralisation d'un tel procédé est donc totalement tributaire de la standardisation de certaines normes de construction. En pratique, ledit procédé est donc inapplicable aux bâtiments, notamment anciens, qui ne respectent pas ces standards, et qui imposent une réalisation sur-mesure, particulièrement longue et onéreuse, requérant la fabrication de panneaux solaires spécifiquement adaptés au cas par cas.

Ensuite, un tel procédé a intrinsèquement pour effet de limiter la surface de captage utile de l'installation, d'une part en imposant la présence d'un cadre de structure autour de chaque panneau solaire, et d'autre part en créant un espace perdu entre panneaux voisins.

En outre, la fixation des pieds par tire-fond à travers le bardage présente un risque sérieux de compromettre l'étanchéité de la toiture, et rend notamment ledit procédé inadapté aux toitures de faible pente ou aux toits-terrasses.

Par ailleurs, la faible portée des pieds utilisés expose les panneaux à une certaine instabilité, voire à un risque accru d'arrachement, notamment en cas de vent violent.

Enfin, et surtout, l'installation de plusieurs panneaux selon ce procédé implique de devoir manipuler chute sur l'un desdits panneaux en place d'un pied, d'un panneau, ou d'un outil manipulé de nombreuses pièces détachées (pieds, panneaux cadrés, tire-fond) au voisinage immédiat des panneaux déjà installés, ce qui complique intrinsèquement les opérations de pose, et expose les panneaux déjà fixés à un risque important de dégradation accidentelle (rayure ou casse), par exemple en cas de par l'installateur.

Les objets assignés à l'invention visent par conséquent à remédier aux inconvénients susmentionnés et à proposer un nouveau type d'installation qui fournisse un moyen simple de créer un champ de panneaux solaires, de quelque superficie que ce soit, qui accélère la pose, et qui s'affranchisse des tolérances de pose des panneaux solaires ainsi que des conflits entre corps de métier.

Les objets assignés à l'invention sont atteints à l'aide d'une installation d'implantation de panneaux solaires reposant sur une surface extérieure d'un bâtiment, du genre toit-terrasse, ladite installation étant **caractérisée en ce qu'**elle comprend une infrastructure modulaire, destinée à accueillir des panneaux solaires, qui comporte une pluralité de châssis individuels juxtaposés disjoints, apte à supporter chacun de manière autonome au moins un panneau solaire, chacun desdits châssis comportant ses propres organes de retenue agencés selon une configuration d'accueil prédéterminée adaptée pour la réception et la fixation dudit ou desdits panneaux solaires, lesdits organes de retenue étant agencés de manière à autoriser la pose du châssis considéré, vide de panneau solaire, en attente sur la surface extérieure du bâtiment, puis l'accueil ultérieur du ou des panneaux solaires, chacun desdits châssis s'appuyant sur la surface du bâtiment par ses propres pieds porteurs et se trouvant fixé à ladite surface par ses propres organes d'arrimage exclusifs, sans partager lesdits organes de retenue, lesdits pieds porteurs, ni lesdits organes d'arrimage avec les châssis voisins.

Avantageusement une telle conception modulaire mettant en oeuvre des châssis individuels autonomes comme cellules élémentaires de l'infrastructure permet de paver très librement la surface du bâtiment, sans autre contrainte que celle imposée par la superficie disponible.

En particulier, la fonctionnalité d'un châssis, à savoir tant sa capacité à se fixer sur le bâtiment que sa capacité à maintenir convenablement le ou les panneaux solaires qui lui sont assignés, ne dépend avantageusement pas de la précision de positionnement dudit châssis par rapport aux châssis voisins, ces fonctions minimales pouvant être assumées de manière autonome par le châssis, indépendamment des autres châssis, sans interférence ni interaction entre lesdits châssis, et par conséquent sans nécessiter de partage fonctionnel des organes d'arrimage, des pieds porteurs et/ou des organes d'arrimage entre différents châssis.

Grâce à l'infrastructure propre à l'invention, il n'est donc plus nécessaire de respecter des tolérances de pose contraignantes, la précision de la disposition relative, et notamment de l'espacement, des organes de retenue affectés à la tenue d'un même panneau solaire, c'est-à-dire la configuration d'accueil desdits organes de retenue, étant définie intrinsèquement au châssis, par construction lors de l'assemblage en usine dudit châssis.

Chaque châssis, ainsi préalablement équipé d'organes de retenue convenablement disposés, peut ensuite être aisément manipulé individuellement sur le chantier, dans son ensemble, sans risque d'altérer la configuration d'accueil desdits organes de retenue telle qu'elle a été prédéfinie en usine, de tel sorte que ledit châssis peut être posé au regard de la surface du bâtiment selon une position spatiale (considérée en abscisse et en ordonnée en projection dans le plan de la surface du bâtiment) et une orientation azimutale (c'est-à-dire une orientation angulaire par rapport à la normale à la surface du bâtiment) librement choisies, avec un simple alignement « à l'oeil », sans mesure, ni tracé, ni calage de reprise sur les éléments d'un châssis déjà en place.

Avantageusement, il n'est donc plus besoin de pré-installer précisément sur le bâtiment une quelconque sous-structure de fixation qui permettrait d'aligner relativement les châssis les uns par rapport aux autres, un tel alignement strict étant devenu superflu puisqu'il n'a pas d'influence sur la pose et le maintien des panneaux sur l'infrastructure conforme à l'invention.

Ainsi, il est possible de réaliser très rapidement, en un minimum d'opérations et sans risque d'erreur de pose, une infrastructure, qui sera laissée en attente par l'étancheur puis garnie ensuite par l'électricien d'un champ de panneaux solaires, au moyen de châssis avantageusement standardisés, légers, compacts, facilement manipulables, et peu coûteux à produire.

Bien entendu l'invention porte également sur un châssis formant la cellule élémentaire d'une telle infrastructure, ainsi que sur un procédé de réalisation d'un champ de panneaux solaires correspondant.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue en perspective de dessus, un exemple de châssis individuel conforme à l'invention.
La figure 2 illustre, selon une vue en perspective de dessus, le châssis de la figure 1 équipé de panneaux solaires.
La figure 3 illustre, selon une vue en perspective de dessus, une installation conforme à l'invention, comportant une pluralité de châssis selon la figure 2, juxtaposés de sorte à former un champ de panneaux solaires.
La figure 4 illustre, selon une vue schématique de dessus, le principe d'implantation « à l'oeil » des châssis, grâce à l'importante tolérance d'alignement autorisée par l'invention.
La figure 5 illustre, selon une vue partielle en coupe transverse, la fixation d'un châssis conforme à l'invention sur une surface de bâtiment protégée par une barrière d'étanchéité.

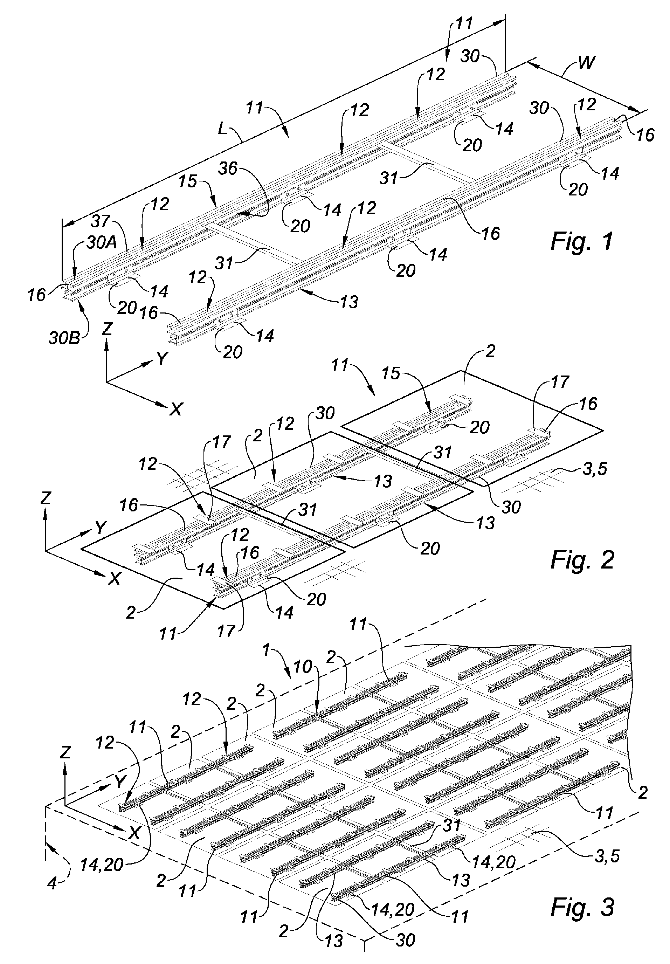

La présente invention concerne une installation 1 d'implantation de panneaux solaires 2 reposant sur une surface extérieure 3 d'un bâtiment 4, du genre toit-terrasse, tel que cela est illustré sur la figure 3.

L'invention permet avantageusement de réaliser un champ de panneaux solaires 2, de préférence sensiblement rectangulaire, en bardant une superficie d'étendue librement choisie de ladite surface extérieure 3, préférentiellement en disposant les panneaux solaires sensiblement parallèlement à ladite surface extérieure.

Bien qu'il ne soit pas exclu de mettre ainsi en oeuvre des panneaux solaires « thermiques », aptes à capter la chaleur du rayonnement solaire pour chauffer un fluide caloporteur, l'invention est de préférence destinée à la mise en oeuvre de panneaux 2 photovoltaïques, de préférence non cadrés, destinés à convertir le rayonnement solaire en électricité.

Ladite surface extérieure 3 est de préférence sensiblement horizontale, et peut notamment former un toit-terrasse ou une terrasse, ce qui permet une implantation des panneaux à plat.

Le bâtiment 4 peut quant à lui être constitué notamment, mais non limitativement, par tout type de construction susceptible d'accueillir du public ou de stocker des marchandises à l'abri des conditions atmosphériques extérieures, tel que maison individuelle, immeuble d'habitation, centre commercial, entrepôt, bâtiment industriel, immeuble de bureaux, etc.

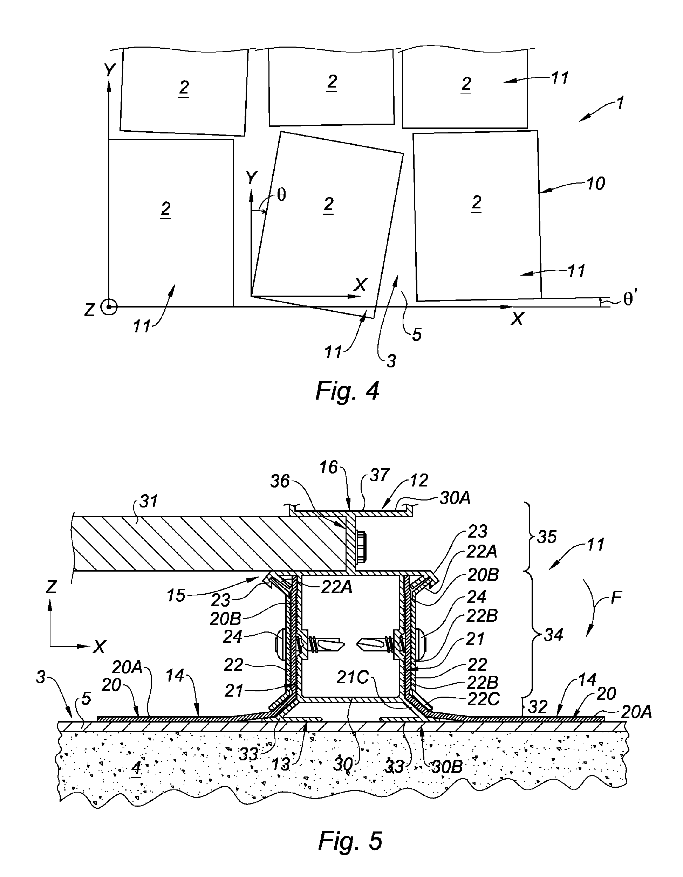

A ce titre, la surface extérieure 3 dudit bâtiment comporte de préférence, tel que cela est représenté sur la figure 5, une barrière d'étanchéité 5, telle qu'une membrane d'étanchéité, réalisée par exemple dans une feuille de matériau polymère, et qui est destinée à empêcher l'eau, et plus particulièrement la pluie ou les eaux de ruissellement, de pénétrer dans la structure du bâtiment 4.

Selon l'invention, l'installation 1 comprend une infrastructure modulaire 10 , destinée à accueillir des panneaux solaires 2, qui comporte une pluralité de châssis individuels 11 juxtaposés disjoints, aptes à supporter chacun de manière autonome au moins un panneau solaire 2.

Chacun desdits châssis 11 comporte ses propres organes de retenue 12 agencés selon une configuration d'accueil prédéterminée adaptée pour la réception et la fixation dudit ou desdits panneaux solaires 2, chacun desdits châssis 11 s'appuyant sur la surface 3 du bâtiment 4 par ses propres pieds porteurs 13 et se trouvant fixé à ladite surface par ses propres organes d'arrimage 14 exclusifs, sans partager lesdits organes de retenue 12, lesdits pieds porteurs 13, ni lesdits organes d'arrimage 14 avec les châssis voisins.

En d'autres termes, les châssis 11, ou leurs éléments constitutifs, n'ont avantageusement pas besoin de partager une même structure de liaison ou d'interconnexion rigide autre que la surface 3 brute du bâtiment elle-même, et peuvent donc être posés indépendamment les uns des autres, directement sur ladite surface 3.

Les châssis 11 étant en effet avantageusement autonomes fonctionnellement, il est possible de créer un réseau de plusieurs châssis, arrimés séparément à la surface du bâtiment, pour former les mailles dudit réseau, sans qu'il soit nécessaire, pour la tenue de l'infrastructure 10 ou des panneaux 2, de prévoir des interconnexions rigides fonctionnelles, rapportées entre différents châssis 11 et communes à plusieurs desdits châssis, qui seraient de nature à contraindre l'alignement relatif desdits châssis.

En particulier, il n'est plus nécessaire de prévoir, entre les organes de châssis voisins, des interconnexions de type entretoises de calage, organes d'épaulement ou fixations communes, ni a *fortiori* de préparer le bâtiment en installant sur celui-ci une quelconque sous-structure primaire d'accrochage, de types rails entrecroisés, formant un quadrillage régulier, quasi-parfait, de la surface 3 dudit bâtiment.

L'infrastructure 10 ainsi obtenue est donc particulièrement simple er rapide à construire sur le chantier, particulièrement légère, et potentiellement compacte, ce qui permet au besoin de placer les panneaux 2 au plus près de la surface 3, sans offrir de prise importante au vent et sans dégrader l'aspect du bâtiment 4.

Avantageusement, il est en outre possible de réaliser une distribution très librement choisie des panneaux sur la surface occupée, sans avoir à respecter de tolérance stricte d'alignement, la distance d'écartement entre les noeuds du réseau pouvant varier, d'une maille à l'autre, dans une direction horizontale X, comme dans l'autre Y.

Ainsi, les seules contraintes véritables d'implantation de l'infrastructure correspondant d'une part au respect de la superficie maximale disponible (capacité d'accueil de la surface 3 du bâtiment), et d'autre part au non-chevauchement des panneaux solaires 2, il est possible, grâce à l'invention, de réaliser une pose « à l'oeil », avec des tolérances de l'ordre du centimètre voire de plusieurs centimètres, et non du millimètre, un châssis 11 pouvant en effet potentiellement venir se fixer en appui sur la surface 3 du bâtiment, et par rapport aux châssis voisins, selon une grande variété de positions (en abscisse X et/ou en ordonnée Y) et d'orientations azimutales θ, θ' (en lacet, autour de la normale Z au plan de la surface 3, ici verticale), tel que cela est illustré sur la figure 4.

A titre d'exemple, l'installation peut présenter au moins une paire de châssis 11, et notamment une paire de châssis 11 immédiatement voisins (lesquels maintiennent préférentiellement leurs panneaux 2 respectifs sensiblement dans un même plan), dont l'écart azimutal d'alignement θ, θ', rapporté à la longueur hors-tout desdits châssis, est supérieur à 2 mm/m, à 5 mm/m, à 1 cm/m, voire à 2 cm/m (soient à environ 0,11 degrés, 0,28 degrés, 0,57 degrés voire 1,15 degrés respectivement).

Dans l'absolu, la tolérance linéaire de pose des châssis 11 conformes à l'invention, c'est-à-dire, en pratique, la plage de positionnement du pied porteur 13 d'un châssis par rapport aux pieds porteurs correspondants des châssis voisins, respectivement d'un organe de retenue 12 d'un châssis par rapport aux organes de retenue des autres châssis, par rapport à la cote nominale qui correspondait à un alignement idéal, pourra en particulier être, le cas échéant selon la longueur hors-tout desdits châssis, supérieure à +/- 1 cm, à +/- 2cm, à +/- 5cm, voire à +/- 10 cm.

Le caractère modulaire de l'installation conforme à l'invention offre donc, par son ergonomie et ses capacités d'adaptation, un grand confort de pose à l'étancheur.

De surcroît, les moyens de retenue 12 sont, de façon particulièrement préférentielle, agencés de manière à autoriser la pose du châssis 11 considéré, vide de panneau solaire 2, en attente sur la surface extérieure 3 du bâtiment 4, puis, ensuite, l'accueil ultérieur du ou des panneaux solaires 2.

En d'autres termes, la conception des moyens de retenue 12 permet de préférence de ménager un libre accès des panneaux solaires 2 au châssis 11 qui permet de rapporter postérieurement lesdits panneaux 2 sur le châssis 11, de préférence par la face supérieure dudit châssis 11, après que ledit châssis 11 a été posé et fixé sur le bâtiment 4.

Ainsi, on pourra séparer dans le temps les opérations de mise en place du châssis 11 d'une part, et de mise en place du ou des panneaux solaires 2 correspondants d'autre part.

Avantageusement, on pourra ainsi différer en pratique l'implantation des panneaux solaires 2, relativement fragiles et coûteux, par rapport au chantier d'installation de l'infrastructure 10 porteuse proprement dite, ce qui évite de compromettre la sécurité des panneaux solaires 2 par une exposition prématurée et inutile à des risques extérieurs, tels que des chutes d'outils ou de châssis 11 manipulés lors du montage de l'infrastructure 10.

On minimise ainsi le risque d'endommager accidentellement les panneaux 2 lors de la mise en place de l'installation 1.

En outre, sous réserve du caractère de préférence réversible de la fixation procurée par les organes de retenue 12, les panneaux 2 pourront ainsi rester facilement accessibles, et amovibles du châssis 11 qui les accueille, ce qui simplifiera grandement la maintenance de l'installation 1, dans la mesure où tout panneau 2 défaillant ou endommagé pourra être, de préférence individuellement, retiré et remplacé, notamment sans qu'il soit nécessaire d'intervenir au niveau des pieds 13 ou des organes d'arrimage 14 du châssis 11 concerné.

Par ailleurs, l'infrastructure modulaire 10 est de préférence formée par une pluralité de châssis 11 identiques juxtaposés, ce qui permet de standardiser la fabrication et de simplifier la pose de ladite infrastructure.

De préférence, l'installation comporte une pluralité de panneaux solaires 2, et plus particulièrement de panneaux photovoltaïques non cadrés, disposés sur l'infrastructure 10 sensiblement bords à bords, à intervalles de séparation inférieurs à 10 cm, 5 cm voire 2 cm, de sorte à former un champ de panneaux 2 sensiblement continu, préférentiellement parallèle à la surface extérieure 3 du bâtiment.

De préférence, l'écart maximal de séparation considéré, parallèlement à la surface 3, entre les bords les plus proches de deux panneaux 2 voisins pourra être inférieur à 10 %, à 5 %, à 2 % voire à 1 % de la dimension (longueur ou largeur) correspondante du panneau.

On pourra ainsi maximiser la densité de surface utile de captage des rayons solaires, et plus particulièrement la superficie des cellules photovoltaïques, sur une superficie de bâtiment donnée.

Bien entendu, l'invention concerne en tant que tel un châssis 11 adapté à la mise en oeuvre de l'installation 1, et plus particulièrement un châssis 11 destiné à la fixation d'un ou plusieurs panneaux solaires 2 sur une surface extérieure 3 d'un bâtiment 4, telle qu'un toit-terrasse, ledit châssis 11 formant un module autonome destiné à être rapporté dans son ensemble et fixé tel quel directement sur ladite surface 3, ledit châssis 11 comportant à cet effet un corps pré-assemblé 15 sur lequel sont embarqués simultanément et solidairement au moins un pied porteur 13 propre au châssis, conçu pour venir s'appuyer contre ladite surface extérieure 3, au moins un organe d'arrimage 14 propre au châssis, conçu pour venir en prise avec ladite surface extérieure afin d'assurer la fixation individuelle du corps 15 sur ladite surface 3, ainsi qu'une pluralité d'organes de retenue 12 propres au châssis, répartis selon une configuration d'accueil prédéterminée, adaptée pour la réception et la fixation dudit ou desdits panneaux solaires 2, et non dépendante de l'agencement du ou des organes d'arrimage 14 par rapport audit corps 15.

Bien entendu, la nature des organes de retenue 12 n'est nullement limitée, dès lors que lesdits organes de retenue offrent globalement une surface d'appui et/ou un nombre d'appuis suffisants pour assurer le maintien stable de chaque panneau 2 sur le châssis 11 qui lui correspond, et plus particulièrement définissent une pluralité de zones de retenue distantes réparties sur le corps 15 qui sont, dans leur ensemble, à même d'offrir un appui stable à chaque panneau 2 en plusieurs points espacés de ce dernier.

A titre d'exemple, les organes de retenue 12 pourront comporter des pinces permettant une prise en feuillure des panneaux, ou bien encore, tel que cela est illustré sur les figures 2 et 3, un système de prises femelles 16, par exemple de type rainures ou queues d'aronde, conçues pour recevoir, par exemple par encliquetage, des pièces d'ancrage mâles 17 de forme sensiblement conjuguée, elles-mêmes préalablement fixées au dos des panneaux 2.

Avantageusement, en disposant les organes de retenue 12, 16 à l'abri des panneaux 2, entre ces derniers et la surface 3 du bâtiment, sans laisser apparaître d'élément en saillie verticale au-delà de la face apparente desdits panneaux, on évite, de même qu'en renonçant à l'utilisation de cadres, tout effet de « piscine », c'est-à-dire toute accumulation d'eau ou de saleté sur la surface de captage desdits panneaux, ce qui améliore bien entendu les performances de l'installation 1 et simplifie, le cas échéant, son entretien.

Par ailleurs, les organes de retenue 12 permettent de préférence l'accueil ultérieur (différé) du ou des panneaux solaires 2, pour les raisons de modularité et de sécurité déjà évoquées.

Par ailleurs, les organes d'arrimage 14 seront avantageusement agencés de telle sorte qu'ils restent accessibles et manoeuvrables par l'extérieur du châssis, et plus particulièrement par la face supérieure du corps 15, orientée à l'opposé de la face qui repose contre ladite surface 3 du bâtiment, en particulier avant la pose du panneau 2, et alors que les pieds porteurs 13 reposent sur la surface 3 du bâtiment.

L'arrimage du châssis 11 sur la surface 3, et plus particulièrement en terrasse, pourra ainsi intervenir dans de bonnes conditions d'ergonomie et de stabilité, ledit châssis 11 étant tout d'abord simplement posé en appui libre sur ladite surface, dans une position et une orientation librement choisies et provisoirement modifiables, avant d'être ensuite solidarisé au bâtiment 4, dans la position et l'orientation finalement sélectionnées, en principe invariantes par la suite, par la mise en oeuvre des organes d'arrimage 14.

De préférence, le ou les châssis 11 reposent et sont fixés sur une même membrane d'étanchéité 5 couvrant la surface 3 du bâtiment, sans transpercer ladite membrane d'étanchéité 5, tel que cela est par exemple illustré sur la figure 5.

L'étanchéité du bâtiment 4 est ainsi avantageusement préservée lors de l'implantation de l'infrastructure 10 conforme à l'invention, la barrière d'étanchéité n'étant pas altérée par les opérations d'installation des châssis 11.

Avantageusement, l'invention permet notamment à l'étancheur de faire l'économie des opérations de réfection de l'étanchéité qui étaient jusqu'à présent nécessaires après la fixation de panneaux sur la surface d'un bâtiment.

A cet effet le ou les pieds porteurs 13 et le ou les organes d'arrimage 14 sont donc préférentiellement conçus pour pouvoir respectivement venir en appui et se fixer sur une membrane d'étanchéité 5 protégeant la surface extérieure 3 du bâtiment 4 sans percer ladite membrane.

En particulier le ou les organes d'arrimage 14 peuvent comporter à cet effet, selon une caractéristique préférentielle qui peut constituer une invention à part entière, une ou des bavettes souples 20 destinées à être collées ou thermo-soudées sur la membrane d'étanchéité 5.

De préférence, lesdites bavettes 20 seront réalisées dans un matériau, par exemple polymère, identique à celui qui compose la membrane d'étanchéité 5, et par exemple par des chutes récupérées lors de la mise en place de ladite membrane sur le bâtiment 4.

Avantageusement, la flexibilité des bavettes 20 leur permet notamment d'épouser intimement la surface 3 du bâtiment, sans contrainte ni risque de déchirure ou de perforation de la membrane d'étanchéité 5. Ainsi, non seulement l'étanchéité du bâtiment ne risque pas d'être compromise par les châssis 11, mais elle se trouve même potentiellement renforcée à l'aplomb desdits châssis.

Avantageusement, tel que cela est illustré sur la figure 5, le corps 15 peut comprendre, sur au moins l'un de ses chants latéraux, voire sur chacun desdits chants, au moins un renfoncement concave 21 destiné à accueillir une bavette 20.

Plus particulièrement, la ou les bavettes 20 pourront présenter d'une part une portion libre 20A destinée à être fixée sur la membrane d'étanchéité 5 et d'autre part une portion captive 20B qui est pincée contre le corps 15, et plus particulièrement contre l'un ou l'autre des chants latéraux dudit corps, et par exemple dans ledit renfoncement 21, par une lame ou un profilé de maintien 22, qui présente le cas échéant une forme conjuguée à celle dudit renfoncement 21.

A titre d'exemple, le renfoncement 21, de même que le profilé de maintien 22, pourra présenter une forme sensiblement trapézoïdale, l'une des extrémités coudées 22A du profilé de maintien 22 pouvant avantageusement être enfilée dans une gouttière de retenue 23 solidaire du corps 15, avant que la portion centrale 22B dudit profilé de maintien soit basculée et rabattue contre la portion captive 20B de la bavette (mouvement F sur la figure 5), en direction du fond du renfoncement 21, contre lequel ladite portion centrale est plaquée à force par une vis 24.

On peut ainsi assurer un maintien à la fois solide et respectueux de l'intégrité de la bavette 20, les extrémités coudées 22C, 21C, ici inférieures, du profilé de maintien 22 et du renfoncement 21 permettant avantageusement, le cas échéant, d'assurer, du fait de leur inclinaison, une transition progressive, en pente douce, de la portion captive 20B à la portion libre 20A de la bavette 20, ce qui limite notamment les risques de formation d'un pli marqué et donc de fissuration ou de déchirure.

Bien entendu, le principe consistant à fixer, sur une membrane d'étanchéité 5 protégeant la surface 3 d'un bâtiment 4, des châssis 11 porteurs conçus pour permettre la fixation de panneaux solaires 2 sur ladite surface de bâtiment, sans avoir à perforer ladite membrane 5, et notamment en utilisant une ou plusieurs bavettes 20 susmentionnées, est applicable à tout type de châssis 11, quel que soit son agencement ou celui de ses moyens de retenue 12, et notamment à tout châssis 11 comprenant tout ou partie des caractéristiques décrites dans la présente demande.

Ce principe de fixation sans perforation concerne bien entendu tout aussi bien un châssis 11 adapté à une pose préliminaire à vide (sans panneau solaire 2) qu'un châssis intégré qui embarquerait d'emblée, par construction, et dès sa pose, un ou des panneaux solaires 2.

Ainsi, la présente invention peut porter en tant que telle sur une installation 1 d'implantation de panneaux solaires 2 comprenant un ou plusieurs châssis 11 qui reposent sur une surface extérieure 3 d'un bâtiment 4 protégée par une membrane d'étanchéité 5, et qui portent, ou sont conçus pour porter, chacun au moins un panneau solaire 2 (les châssis comprenant à cet effet des organes de retenue 12 appropriés pour la réception et la fixation dudit ou desdits panneaux 2), lesdits châssis 11 étant fixés, de préférence individuellement et indépendamment les uns des autres, sur la membrane d'étanchéité 5 par des organes d'arrimage 14 non perforants, tels que des bavettes souples 20 collées ou thermo-soudées, qui ne transpercent pas ladite membrane d'étanchéité 5.

Lesdits châssis 11 seront de préférence fixés au bâtiment exclusivement par de tels organes d'arrimage 14 non perforants, de telle sorte qu'aucun élément de la structure desdits châssis 11 ne traverse la membrane 5, qui reste ainsi intacte et conserve donc ses propriétés d'étanchéité.

Le cas échéant, l'invention portera bien entendu en tant que telle sur un châssis 11 destiné à la fixation de panneaux solaires 2 et pourvu d'organes d'arrimage 14 non perforants apte à assurer la fixation dudit châssis sur une membrane d'étanchéité 5 sans transpercer cette dernière, ainsi qu'à un procédé de fixation de panneaux solaires 2 sur la membrane d'étanchéité 5 protégeant la surface 3 d'un bâtiment 5, au cours duquel on arrime à ladite membrane d'étanchéité 5, sans transpercer ladite membrane 5, un châssis 11 conçu pour accueillir un ou plusieurs panneaux solaires 2.

Selon une variante de réalisation préférentielle le corps 15 pré-assemblé comprend au moins deux longerons 30 qui sont maintenus parallèles l'un à l'autre par au moins deux traverses 31 formant entretoises.

Avantageusement, lesdites traverses 31 définissent et conservent, par construction rigide, l'alignement des longerons, et par conséquent celui des organes de retenue 12 portés par lesdits longerons 30, ce qui garantit automatiquement le respect des tolérances d'assemblage des panneaux sur le châssis 11, quelle que soit l'implantation des pieds porteurs 13 sur la surface du bâtiment 4.

De préférence, le corps 15 compte exactement deux longerons 30, et préférentiellement exactement deux traverses 31.

En outre, les longerons sont de préférence tous de longueur égale, et les traverses 31 toutes de longueur égale entre elles, mais plus courtes que les longerons 30.

De préférence, les traverses seront disposées à distance des extrémité longitudinales des longerons 30, en retrait vers l'intérieur du châssis 11, qui se présentera alors sensiblement sous la forme d'une sorte d'échelle, tel que cela est illustré sur les figures 1 à 3.

A titre d'exemple, lesdites traverses 31 pourront venir se prendre sur les longerons 30 à environ 1/3 et 2/3 de la longueur de ces derniers.

Les traverses pourront avantageusement croiser perpendiculairement les longerons, et notamment être vissées en bout dans des rainures 36 de forme conjuguée ménagées dans les longerons, tel que cela est illustré sur la figure 5.

De préférence, longerons 30 et traverses 31, et plus globalement le châssis 11 dans son ensemble, pourront être réalisés dans un matériau à base d'aluminium, et plus particulièrement à l'aide de profilés idoines.

Les châssis 11 conformes à l'invention peuvent donc avantageusement présenter une structure rigide mais légère, facile à assembler, et peu onéreuse à produire en grande série.

De préférence, chaque longeron 30 présente une face supérieure 30A portant le ou les organes de retenue 12 et une face inférieure 30B opposée, sensiblement parallèle à ladite face supérieure 30A et sensiblement plane, qui forme au moins un pied porteur 13.

On peut ainsi accoler directement le châssis 11 sur la surface 3 du bâtiment, et plus particulièrement sur la membrane d'étanchéité 5, de manière particulièrement stable, en appuyant les longerons 30 à plat sur ladite membrane sans risque d'endommagement ou de perforation.

Une telle solution garantit en outre au besoin une bonne compacité de l'infrastructure 10, seule l'épaisseur des longerons 30 venant s'interposer entre le bâtiment 4 et les panneaux 2 pour permettre le calage de ces derniers.

Selon une caractéristique préférentielle qui peut constituer une invention à part entière, chaque longeron 30 est formé d'un seul tenant par un tronçon de profilé de même nature que l'autre longeron et qui présente préférentiellement, en section transverse, tel que cela est illustré sur la figure 5, une portion inférieure 32 sensiblement trapézoïdale formant une semelle pourvue, à sa base large, d'au moins un, et de préférence deux, patins 33 formant les pieds porteurs 13, et supportant une portion intermédiaire 34 creuse, de préférence sensiblement rectangulaire, elle-même coiffée d'une portion supérieure 35 en T formant d'une part un logement de réception latéral 36 de forme conjuguée à celle de l'extrémité des traverses 31 et d'autre part un plateau supérieur 37, de préférence rainuré en son centre, formant un organe de retenue 12 de type rail.

En utilisant un même profilé standard, monolithique et coupé à longueur, à gauche comme à droite du châssis, on réduit considérablement le coût de fabrication dudit châssis.

De surcroît, le renfoncement concave 21 destiné à bloquer les bavettes 20 peut résulter de la conformation sécante rentrante de la portion inférieure 32 et de la portion intermédiaire 34 du profilé, la gouttière de retenue 23 pouvant quant à elle être formée d'un seul tenant par des extrémités rabattues plongeantes du plateau supérieur coiffant la portion intermédiaire 34.

Bien entendu, l'invention peut concerner en tant que tel un profilé convenant pour la réalisation d'un châssis 11 porteur de panneau solaire 2, et plus particulièrement d'un longeron 30 pour un tel châssis, ledit profilé possédant une section selon la forme préférée décrite ci-dessus.

De préférence, les longerons 30, et leur profilé constitutif, présenteront, par rapport au plan sagittal passant par leur axe générateur central, une symétrie plane (gauche/droite) assurant leur interchangeabilité, et permettant entre autres, plus globalement, de disposer de renfoncements 21 pour bavettes 20, et donc d'organes d'arrimage 14, placés de part et d'autre d'un même longeron 30, et de préférence situés linéairement à la même ordonnée Y considérée selon la longueur dudit longeron.

Par ailleurs, le ou les châssis 11 présentent de préférence une longueur L (hors-tout, correspondant à la longueur d'un longeron 30) sensiblement comprise entre 1 m et 6 m, de préférence entre 2 m et 4 m, et de façon encore plus préférentielle sensiblement égale à 3 m, et une largeur W (hors tout) sensiblement comprise entre 50 cm et 2 m, et de préférence sensiblement égale à 1 m.

Le rapport longueur/largeur desdits châssis sera par ailleurs de préférence compris sensiblement entre 3 et 4.

Les châssis conformes à l'invention présentent donc une structure peu encombrante et légère, et sont ainsi facilement transportables et manipulables, en camionnette comme à la simple force musculaire, ce qui en simplifie l'acheminement et la pose sur le chantier, bien qu'ils couvrent individuellement une superficie élémentaire adaptée aux formats des panneaux photovoltaïques 2.

Le format 3 m x 1 m sera à ce titre particulièrement préféré.

En outre il est remarquable que le châssis 11 est de préférence intégralement situé (caché) sous le ou les panneaux 2 qu'il porte, en retrait des limites latérales du ou des panneaux 2 et en vis-à-vis de la face cachée de ces derniers.

Ainsi, tel que cela est illustré notamment sur les figures 2 et 3, les limites latérales hors-tout du ou des panneaux solaires 2, et plus particulièrement les bords extrémaux de la face visible desdits panneaux, destinée à recevoir l'énergie du soleil, sont de préférence situés en débord (saillie externe) du châssis 11 qui soutient le dos desdits panneaux, de telle sorte que le ou les panneaux 2 portés par un même châssis 11 couvrent avantageusement, ici en particulier en projection dans le plan (X, Y) de la surface 3 du bâtiment, une superficie de captage hors-tout supérieure à la superficie d'implantation hors-tout occupée par le corps 15 dudit châssis 11 seul.

Un tel escamotage améliore dans une certaine mesure l'aspect esthétique de l'installation 1, mais surtout permet de maximiser la surface de captage utile en rapprochant les panneaux 2 voisins quasiment bords à bords, et d'éviter la présence de bordures saillantes qui seraient susceptible de retenir l'eau ou la poussière.

Bien entendu, l'homme du métier sera à même d'adapter les caractéristiques de l'installation 1, et plus particulièrement de l'infrastructure 10 et des châssis 11 en combinant ou isolant tout ou partie des caractéristiques susmentionnées.

Par ailleurs, l'invention concerne également en tant que tel un procédé de réalisation d'un champ de panneaux solaires 2 comprenant une étape (a) de fabrication de châssis 11 au cours de laquelle on pré-assemble une pluralité de châssis 11, aptes à porter chacun de manière autonome au moins un panneau solaire 2, en dotant chaque châssis de ses propres organes de retenue 12 embarqués destinés à accueillir le ou les panneaux solaires et en agençant par construction lesdits organes de retenue selon une configuration d'accueil prédéterminée conforme aux tolérances d'assemblage desdits panneaux, puis une étape (b) de réalisation d'infrastructure 10 au cours de laquelle on place lesdits châssis 11, vides de panneaux solaires, en attente sur la surface 3 du bâtiment 4, en disposant et en fixant progressivement lesdits châssis 11 côte à côte, de manière individuelle et disjointe, directement sur la surface du bâtiment, puis une étape (c) de couverture au cours de laquelle on rapporte les panneaux solaires 2 sur les châssis 11 en place.

Avantageusement, on pourra poser approximativement les différents châssis en rangs, côte à côte, en les faisant reposer chacun exclusivement sur ses propres pieds 13, puis au besoin corriger librement, éventuellement au fur et à mesure de leur pose, la position et l'orientation individuelle de chacun desdits châssis 11, avant leur fixation définitive au bâtiment, chacun par ses propres organes d'arrimage 14, et ce sans pour autant risquer d'altérer la configuration des organes de retenue 12 assurant l'accueil ultérieur des panneaux 2.

En effet, l'invention permet avantageusement de séparer fonctionnellement le référentiel de fixation des panneaux 2 aux châssis 11, et plus particulièrement de rendre ledit référentiel de fixation indépendant du référentiel du bâtiment 4 et de celui des châssis voisins, qui ne lui sont pas nécessairement superposables.

En outre, en utilisant des châssis qui permettent de dissocier et différer (dans le temps) la pose des panneaux solaires 2 par rapport à la mise en place desdits châssis 11 formant l'infrastructure 10, on évite avantageusement d'exposer inutilement les panneaux solaires 2 à des dégradations accidentelles (rayures ou bris) lors du déroulement du chantier de mise en place de ladite infrastructure 10, au cours duquel, notamment, les nombreuses manipulations de châssis 11 en cours de pose au voisinage des châssis 11 déjà posés accroissent le risque d'une mise en appui ou d'une chute dommageable de personne, de châssis ou d'outil sur la portion de ladite infrastructure 10 déjà en place.

Par ailleurs, selon une caractéristique préférentielle qui peut constituer une invention à part entière, le procédé peut comporter une étape de fixation non perforante, par exemple en tant que sous-étape de l'étape (b) de réalisation d'infrastructure 10, au cours de laquelle on fixe le ou les châssis 11 au moyen d'organes d'arrimage 14 qui ne transpercent pas la membrane 5, par exemple par collage ou thermo-soudage de bavettes 20 telles que décrites plus haut.

En définitive, l'utilisation, selon l'invention, de châssis 11 individuels d'interface entre le bâtiment 4 et les panneaux solaires 2 permet avantageusement de réaliser rapidement, à peu de frais, à moindre effort, quasiment sans contraintes d'implantation, sans risque majeur pour les panneaux, et en respectant le bâtiment 4 (et plus particulièrement son étanchéité), une installation 1 de captage d'énergie solaire qui est particulièrement discrète, robuste et efficace.

## Revendications

1. Installation (1) d'implantation de panneaux solaires (2) reposant sur une surface extérieure (3) d'un bâtiment (4), du genre toit-terrasse, ladite installation étant **caractérisée en ce qu'**elle comprend une infrastructure (10) modulaire, destinée à accueillir des panneaux solaires (2), qui comporte une pluralité de châssis individuels (11) juxtaposés disjoints, aptes à supporter chacun de manière autonome au moins un panneau solaire (2), chacun desdits châssis comportant ses propres organes de retenue (12) agencés selon une configuration d'accueil prédéterminée adaptée pour la réception et la fixation dudit ou desdits panneaux solaires, lesdits organes de retenue (12) étant agencés de manière à autoriser la pose du châssis (11) considéré, vide de panneau solaire (2), en attente sur la surface extérieure (3) du bâtiment (4), puis l'accueil ultérieur du ou des panneaux solaires (2), chacun desdits châssis s'appuyant sur la surface (3) du bâtiment par ses propres pieds porteurs (13) et se trouvant fixé à ladite surface (3) par ses propres organes d'arrimage (14) exclusifs, sans partager lesdits organes de retenue (12), lesdits pieds porteurs (13), ni lesdits organes d'arrimage (14) avec les châssis (11) voisins.

2. Installation selon la revendication 1 **caractérisée en ce qu'**elle présente au moins une paire de châssis (11) dont l'écart azimutal d'alignement (θ, θ') est supérieur à 2 mm/m, à 5 mm/m, à 1 cm/m, voire à 2 cm/m.

3. Installation selon la revendication 1 ou 2 **caractérisée en ce que** les châssis (11) reposent et sont fixés sur une même membrane d'étanchéité (5) couvrant la surface du bâtiment, sans transpercer ladite membrane d'étanchéité.

4. Installation selon l'une des revendications 1 à 3 **caractérisée en ce que** l'infrastructure modulaire est formée par une pluralité de châssis (11) identiques juxtaposés.

5. Installation selon l'une des revendications précédentes **caractérisée en ce qu'**elle comporte une pluralité de panneaux photovoltaïques (2) non cadrés disposés sur l'infrastructure (10) sensiblement bords à bords, à intervalles de séparation inférieurs à 10 cm, 5 cm voire 2 cm, de sorte à former un champ de panneaux (2) sensiblement continu, parallèle à la surface extérieure (3) du bâtiment.

6. Installation selon l'une des revendications précédentes **caractérisée en ce qu'**elle comporte au moins un châssis (11) qui est intégralement situé sous le ou les panneaux solaires (2) qu'il porte, en retrait des limites latérales dudit ou desdits panneaux solaires (2) et en vis-à-vis de la face cachée de ces derniers.

7. Châssis (11) destiné à la fixation d'un ou plusieurs panneaux solaires (2) sur une surface extérieure (3) d'un bâtiment (4), telle qu'un toit-terrasse, ledit châssis (11) étant **caractérisé en ce qu'il** forme un module autonome destiné à être rapporté dans son ensemble et fixé tel quel directement sur ladite surface (3), ledit châssis comportant à cet effet un corps (15) pré-assemblé sur lequel sont embarqués simultanément et solidairement au moins un pied porteur (13) propre au châssis, conçu pour venir s'appuyer contre ladite surface extérieure (3), au moins un organe d'arrimage (14) propre au châssis, conçu pour venir en prise avec ladite surface extérieure (3) afin d'assurer la fixation individuelle du corps (15) sur ladite surface, ainsi qu'une pluralité d'organes de retenue (12) propres au châssis, permettant l'accueil ultérieur du ou des panneaux solaires (2) et répartis selon une configuration d'accueil prédéterminée, adaptée pour la réception et la fixation dudit ou desdits panneaux solaires (2), et non dépendante de l'agencement du ou des organes d'arrimage (14) par rapport audit corps (15).

8. Châssis selon la revendication 7 **caractérisé en ce que** le ou les pieds porteurs (13) et le ou les organes d'arrimage (14) sont conçus pour pouvoir respectivement venir en appui et se fixer sur une membrane d'étanchéité (5) protégeant la surface extérieure (3) du bâtiment (4) sans percer ladite membrane d'étanchéité (5).

9. Châssis selon la revendication 8 **caractérisé en ce que** le ou les organes d'arrimage (14) comportent une ou des bavettes souples (20) destinées à être collées ou thermo-soudées sur la membrane d'étanchéité (5).

10. Châssis selon la revendication 9 **caractérisé en ce que** le corps (15) comprend, sur au moins l'un de ses chants latéraux, au moins un renfoncement concave (21) destiné à accueillir une bavette (20) et **en ce que** la ou les bavettes présentent d'une part une portion libre (20A) destinée à être fixée sur la membrane d'étanchéité (5) et d'autre part une portion captive (20B) qui est pincée dans ledit renfoncement (21) par une lame ou un profilé de maintien (22) de forme conjuguée à celle du renfoncement (21).

11. Châssis selon l'une des revendications 7 à 10 **caractérisé en ce que** le corps (15) pré-assemblé comprend au moins deux longerons (30) qui sont maintenus parallèles l'un à l'autre par au moins deux traverses (31) formant entretoises.

12. Châssis selon la revendication 11 **caractérisé en ce que** chaque longeron (30) présente une face supérieure (30A) portant le ou les organes de retenue (12) et une face inférieure (30B) opposée, sensiblement parallèle à ladite face supérieure et sensiblement plane, qui forme au moins un pied porteur (13).

13. Châssis selon la revendication 11 ou 12 **caractérisé en ce que** chaque longeron (30) est formé d'un seul tenant par un tronçon de profilé de même nature que l'autre longeron et qui présente, en section transverse, une portion inférieure (32) sensiblement trapézoïdale formant une semelle pourvue, à sa base large, d'au moins un, et de préférence deux, patins (33) formant les pieds porteurs (13), et supportant une portion intermédiaire (34) creuse, de préférence sensiblement rectangulaire, elle-même coiffée d'une portion supérieure (35) en T formant d'une part un logement de réception latéral (36) de forme conjuguée à celle de l'extrémité des traverses (31) et d'autre part un plateau supérieur (37), de préférence rainuré en son centre, formant un organe de retenue (12) de type rail.

14. Châssis selon l'une des revendications 7 à 13 **caractérisé en ce qu'il** présente une longueur (L) sensiblement comprise entre 1 m et 6 m, de préférence entre 2 m et 4 m, et de façon encore plus préférentielle sensiblement égale à 3 m, et une largeur (W) sensiblement comprise entre 50 cm et 2 m, et de préférence sensiblement égale à 1 m.

15. Procédé de réalisation d'un champ de panneaux solaires (2) comprenant une étape (a) de fabrication de châssis (11) au cours de laquelle on pré-assemble une pluralité de châssis (11), aptes à porter chacun de manière autonome au moins un panneau solaire (2), en dotant chaque châssis de ses propres organe de retenue (12) embarqués destinés à accueillir le ou les panneaux solaires et en agençant par construction lesdits organes de retenue selon une configuration d'accueil prédéterminée conforme aux tolérances d'assemblage desdits panneaux (2), puis une étape (b) de réalisation d'infrastructure (10) au cours de laquelle on place lesdits châssis (11), vides de panneaux solaires, en attente sur la surface (3) du bâtiment (4), en disposant et en fixant progressivement lesdits châssis (11) côte à côte, de manière individuelle et disjointe, directement sur la surface du bâtiment, puis une étape (c) de couverture au cours de laquelle on rapporte les panneaux solaires (2) sur les châssis (11) en place.
